# FASCICULE DE BREVET EUROPEEN

(11) **EP 3 948 905 B1**
(45) Date de publication et mention de la délivrance du brevet: **20.05.2026**
(21) Numéro de dépôt: 20714666.3
(22) Date de dépôt: 03.04.2020
(51) Int. Cl.: H01G 2/04, H01G 2/10, H01G 11/08, H01G 11/18, H01G 11/82, H01M 50/24, H01M 50/271, H01M 50/296

(54) **BLOC CAPACITIF COMPRENANT UNE ENTRETOISE**
KAPAZITIVER BLOCK MIT EINEM ABSTANDSHALTER
CAPACITIVE BLOCK COMPRISING A SPACER

(30) Priorité: 05.04.2019 FR 1903709
(43) Date de publication de la demande: 09.02.2022
(73) Titulaire: Valeo Electrification, 95800 Cergy (FR)
(72) Inventeur: BOUR, Stéphane, 95800 CERGY (FR); GILET, Olivier, 95800 CERGY (FR)
(74) Mandataire: Valeo Powertrain Systems
(86) Numéro de dépôt international: PCT/EP2020/059631
(87) Numéro de publication internationale: WO 2020/201536

(56) Documents cités:
- EP-A1- 3 197 035
- WO-A1-2012/105496
- WO-A1-2013/113691
- DE-A1- 102012 205 310
- US-A1- 2018 316 071

## Description

### DOMAINE TECHNIQUE ET OBJET DE L'INVENTION

La présente invention concerne un bloc capacitif, notamment pour un équipement électrique, par exemple embarqué dans un véhicule automobile. Un tel équipement électrique peut être un onduleur, un convertisseur de tension ou un chargeur électrique de batterie.

Comme cela est connu, dans un bloc capacitif, un élément capacitif peut être disposé dans un boîtier et noyé dans un matériau de remplissage assurant principalement une fonction de maintien et de protection de l'élément capacitif vis-à-vis de l'humidité. Un tel matériau de remplissage se présente généralement sous la forme d'une résine. L'élément capacitif est par exemple constitué par des films enroulés autour des bornes de la capacité. Typiquement, l'élément capacitif est intégralement noyé dans la résine de sorte que l'extérieur du bloc capacitif est formé par des parois externes du boitier et une face formée par la résine. Seules des bornes électriques s'étendent à l'extérieur de la résine depuis ladite face. Cependant, dans certaines applications, en particulier dans des véhicules électriques, on cherche à diminuer l'encombrement des composants électroniques. Or, dans cette structure de bloc capacitif, le boitier et la résine occupent un espace qui peut être non négligeable. En outre, il est nécessaire de laisser un espace entre l'élément capacitif et les parois latérales du boitier pour permettre un écoulement de la résine.

On connait un bloc capacitif dans lequel le boitier s'étend sur une hauteur inférieure à la hauteur de l'élément capacitif. Le boitier forme alors une cuvette juste suffisante pour recevoir de la résine au niveau d'une extrémité du bloc capacitif qui comprend la connexion électrique entre une borne électrique du bloc capacitif et une électrode de l'élément capacitif.

Cependant, les éléments capacitifs d'un même modèle peuvent avoir des hauteurs différentes du fait des incertitudes inhérentes à leur processus de fabrication. Ainsi, dans un même bloc capacitif, les éléments capacitifs peuvent avoir des hauteurs différentes. En outre, dans un processus de fabrication industrielle, d'un bloc capacitif à l'autre les éléments capacitifs peuvent avoir des hauteurs différentes, ce qui impacte la reproductibilité des dimensions des blocs capacitifs fabriqués. Ceci est particulièrement important dans des équipements électriques dans lesquels le bloc capacitif doit être refroidi de manière à dissiper la chaleur émise lors d'une alimentation du bloc capacitif par une énergie électrique. À cette fin, l'équipement électrique est généralement pourvu d'un circuit de refroidissement. Afin d'optimiser la dissipation thermique toute une face du bloc capacitif doit être plaquée contre ledit circuit de refroidissement. Or une différence de hauteur entre les éléments capacitifs du bloc capacitif peut ne pas permettre un plaquage uniforme de la face du bloc capacitif contre le circuit de refroidissement. Si malgré tout l'on s'assure que les hauteurs sont uniformes dans un bloc capacitif, une différence entre blocs capacitifs de même modèle peut entrainer des perturbations dans la chaine de côte de l'équipement électrique qui comprend le bloc capacitif. Une hauteur spécifique à chaque bloc capacitif n'est pas adaptée à une fabrication industrielle.

L'état de la technique pertinent peut être trouvé dans les documents DE102012205310 A1, WO2013/113691, WO 2012/105496 A1 and US 2018/316071 A1.

Il existe donc un besoin pour un bloc capacitif ayant un encombrement limité tout en conservant une certaine souplesse vis-à-vis des incertitudes de fabrication des éléments capacitifs.

À cet effet, la présente invention concerne un bloc capacitif, notamment pour un équipement électrique, comportant un logement ; au moins un élément capacitif ayant une première extrémité logée dans ledit logement et une deuxième extrémité, qui est opposée à la première extrémité et qui s'étend hors dudit logement ; une butée, ladite butée étant fixée sur la deuxième extrémité de l'élément capacitif ; au moins une entretoise, venant contre ladite butée, de façon à déterminer la distance entre la deuxième extrémité de l'élément capacitif et un fond dudit logement.

Ainsi, l'entretoise supporte ledit élément capacitif en vis-à-vis du fond dudit logement. La hauteur du bloc capacitif entre le fond du logement et la deuxième extrémité de l'élément capacitif est maîtrisée par l'entretoise, de sorte que la hauteur du bloc capacitif est contrôlée en dépit de l'incertitude sur la hauteur des éléments capacitifs. Le fond est par exemple une paroi du logement, notamment une paroi périphérique, qui est en vis-à-vis de la première extrémité de l'élément capacitif.

Selon un mode de réalisation de l'invention, une matière de remplissage, notamment une résine, remplit au moins en partie ledit logement de manière à réaliser une étanchéité de l'élément capacitif au niveau de la première extrémité de l'élément capacitif. Selon une variante, la matière de remplissage est un isolant électrique, elle assure ainsi une isolation électrique de la première extrémité vis-à-vis du logement recevant la première extrémité.

La résine présente plusieurs caractéristiques avantageuses pour son utilisation dans un bloc capacitif. En particulier, la résine est fluide lors du remplissage du logement. La fluidité permet une répartition uniforme de la résine dans le logement, entre les éléments capacitifs, les connexions des éléments capacitifs. La résine durcit par chauffage, en effet elle polymérise. Donc après l'étape de polymérisation, la résine devient solide. Une telle polymérisation peut être réalisée par échauffement dans un four. Ainsi, la résine entoure une extrémité de l'élément capacitif, rendant cette extrémité étanche. En outre, la résine polymérisée rend le fond du logement rigide et solide, ce qui permet un appui efficace par une face externe du fond lors d'un plaquage du bloc capacitif contre un dissipateur thermique.

Selon une variante, la deuxième extrémité de l'élément capacitif s'étend hors de ladite matière de remplissage. Seule une partie de l'élément capacitif se trouve dans le logement.

Selon un mode de réalisation de l'invention, le logement est formé par le fond et une paroi latérale s'étendant depuis ledit fond, délimitant un volume interne dudit logement. Le fond du logement comprend l'extrémité de l'élément capacitif et en même temps il sert d'isolation électrique entre l'élément capacitif et l'organe élastique. Notamment, la paroi latérale s'étend vers la deuxième extrémité de l'élément capacitif.

Dans une variante, la paroi latérale s'arrête avant la deuxième extrémité de l'élément capacitif. Le logement comporte donc uniquement la première extrémité de l'élément capacitif. La paroi latérale s'arrête notamment à une hauteur inférieure à la moitié, voire au tiers ou au quart de la hauteur de l'élément capacitif. La taille du logement est donc réduite, l'encombrement du bloc capacitif est donc également réduit.

Dans une variante, pour un remplissage rapide et uniforme avantageux pour un procédé de fabrication industrielle, la paroi latérale du logement peut être inclinée vers l'extérieure. C'est à dire que l'aire délimitée par le bord de la paroi latérale, notamment dans un plan parallèle par rapport au fond du logement, cette aire est plus grande que l'aire du fond du logement. L'espace occupé par le bloc capacitif dépend au moins en partie de l'étendue des parois latérales du logement. Moins les parois latérales s'étendent, moins l'espace est encombré par le bloc capacitif. Néanmoins, dans cette variante, il est préférable d'assurer un minimum d'envergure afin de permettre l'étanchéité de la première extrémité de l'élément capacitif, noyée dans la matière de remplissage.

Dans une variante, la matière de remplissage s'étend à une hauteur inférieure à la hauteur de ladite paroi latérale. En particulier, la manipulation du bloc capacitif avant polymérisation est facilitée, car le risque d'un débordement est réduit.

Selon un mode de réalisation de l'invention, l'entretoise s'étend depuis le fond du logement.

Dans un mode de réalisation de l'invention, le bloc capacitif comporte au moins deux entretoises, lesquelles sont réparties régulièrement sur le fond du logement. Ainsi, on s'assure que les points d'appui entre les entretoises et la butée sont régulièrement réparties. De la sorte, on évite un déséquilibre de l'élément capacitif par rapport aux entretoises. Un tel déséquilibre pourrait entrainer un basculement de l'élément capacitif et donc une face externe du bloc capacitif, au niveau de la deuxième extrémité de l'élément capacitif, qui ne serait pas parallèle par rapport au fond du logement. Ceci serait particulièrement préjudiciable lors d'un plaquage du bloc capacitif sur un dissipateur thermique. Un tel plaquage est effectué par exemple, en appuyant avec un organe élastique sous contrainte sur la face externe du fond du logement pour une mise en appui de la face externe opposée du bloc capacitif contre un dissipateur thermique. La dissipation thermique résultant du plaquage du bloc capacitif contre le dissipateur thermique est optimale quand le plan de la surface plaquée est parallèle par rapport à la surface poussée par l'organe élastique. Les au moins deux entretoises déterminent une distance égale entre la butée et le fond dudit logement à tout point de la butée. Elles contribuent alors à tenir la butée en parallèle par rapport au fond du logement. Les entretoises peuvent favoriser une répartition uniforme de la force de plaquage appliquée par l'organe élastique.

Selon un mode de réalisation de l'invention, l'entretoise a une forme cylindrique ou conique.

Dans un mode de réalisation de l'invention, la première extrémité de l'élément capacitif comprend une première électrode de l'élément capacitif, et le bloc capacitif comprend une première borne électrique venant contre ladite première électrode de manière à se connecter électriquement à la première électrode, ladite première borne électrique comportant au moins une ouverture, traversée par ladite entretoise. L'ouverture dans la première borne électrique permet un gain d'espace. En effet, il n'est alors pas nécessaire de prévoir dans le fond du logement un débordement autour de la première borne électrique. Un tel débordement aurait reçu l'entretoise pour qu'elle s'étende vers la butée en passant à côté de la première borne électrique. Grâce à l'ouverture dans la première borne électrique, on peut se passer d'un tel débordement, ce qui réduit l'encombrement du bloc capacitif. L'ouverture peut avoir des formes diverses. Elle peut être constituée par un trou de toute forme possible. L'ouverture peut être une échancrure formée depuis un bord de la première borne électrique. L'ouverture peut être obtenue par découpage ou tout autre moyen. L'ouverture permet le passage de l'entretoise pour qu'elle vienne en appui contre la butée.

Selon un mode de réalisation de l'invention, la butée comprend une deuxième borne électrique de connexion électrique du bloc capacitif, ladite deuxième borne électrique venant contre une deuxième électrode de l'élément capacitif de manière à se connecter électriquement à ladite deuxième électrode de l'élément capacitif. Dans une variante, ladite deuxième électrode est comprise dans la deuxième extrémité de l'élément capacitif.

Selon une variante, la connexion électrique entre la deuxième borne électrique et la deuxième électrode de l'élément capacitif est obtenue par shoopage. L'opération de shoopage consiste notamment à obtenir, par projection de métal, une liaison mécanique et un contact électrique entre l'électrode de l'élément capacitif et la borne électrique correspondante.

Dans une variante, la connexion électrique, notamment la connexion électrique obtenue par shoopage, entre la deuxième borne électrique et la deuxième électrode de l'élément capacitif est couverte d'un vernis de manière à réaliser une étanchéité de ladite connexion électrique. Notamment, le vernis est répandu sur toute la deuxième extrémité de l'élément capacitif. Le vernis permet de réaliser une étanchéité au niveau de la deuxième extrémité sans encombrement. Le vernis est par exemple un vernis au silicone.

Notamment, la première ou la deuxième borne électrique peut être une feuille ou une plaque conductrice. En particulier, la première ou la deuxième borne électrique assure la connexion de l'élément capacitif avec un élément extérieur au bloc capacitif.

L'invention concerne en outre un procédé d'assemblage d'un bloc capacitif comprenant les étapes consistant à :
- fournir un élément capacitif ayant une première extrémité et une deuxième extrémité opposées, une butée étant fixée à la deuxième extrémité,
- monter ledit élément capacitif dans un logement par sa première extrémité de sorte que la deuxième extrémité soit hors dudit logement,
ladite étape de montage comprenant la mise en appui d'au moins une entretoise contre ladite butée de façon à déterminer la distance entre la deuxième extrémité de l'élément capacitif et un fond dudit logement.

Ainsi la fabrication et l'utilisation d'un outil cher, compliqué ou encombrant est évitée.

Selon un mode de réalisation, le procédé comprend les étapes consistant à :
- remplir au moins en partie le logement avec un matériau de remplissage fluide de manière à combler au moins en partie, voire complètement, l'espace entre l'élément capacitif et une paroi périphérique du logement ;
- durcir le matériau de remplissage, notamment par chauffage, en particulier de manière à fixer l'élément capacitif dans le boîtier.

Ainsi, l'élément capacitif est fixé dans le logement et la première extrémité du bloc capacitif est rendue étanche, avec un encombrement limité du bloc capacitif.

L'invention sera mieux comprise au vue des illustrations suivantes :
[Fig.1] montre un bloc capacitif selon un exemple de réalisation de l'invention ;
[Fig.2] montre un capot formant un logement du bloc capacitif de la figure 1 ;
[Fig.3] montre une borne électrique du bloc capacitif de la figure 1 ;
[Fig.4] montre le bloc capacitif de la figure 1 sans le capot ;
[Fig.5] montre un élément capacitif du bloc capacitif.

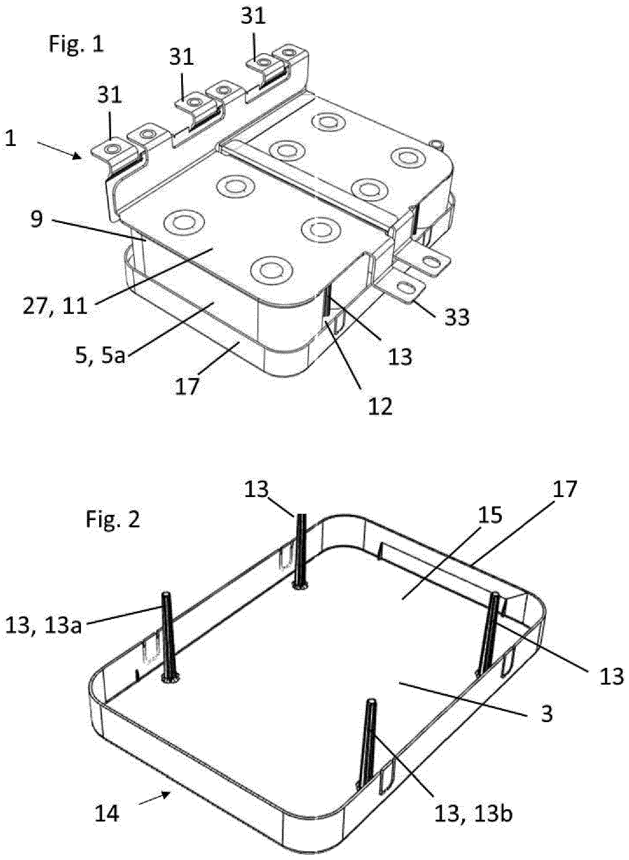

La figure 1 montre un bloc capacitif 1 selon un exemple de réalisation de l'invention. Le bloc capacitif 1 est pourvu d'un capot 14. Ce capot 14 forme un logement 3. Le capot 14 comprend notamment un fond 15 et une paroi latérale 17 qui s'étend depuis le fond 15. Le fond 15 et la paroi latérale 17 délimitent un volume interne du logement 3. Le capot 14 reçoit dans le logement 3 une première extrémité 7 de l'élément capacitif 5. La première extrémité 7 est notamment noyée dans un matériau de remplissage 12, tel que de la résine, contenu dans ledit volume interne.

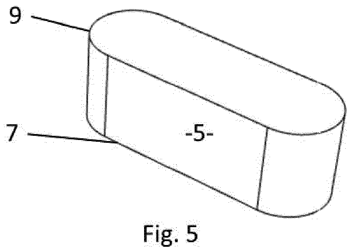

Dans l'exemple illustré, quatre éléments capacitifs 5 sont agencés côte à côte dans le logement 3. Dans ce qui suit, l'exemple sera décrit en faisant référence à un seul 5a des éléments capacitifs 5, la description s'appliquant aisément aux autres éléments capacitifs 5. Un exemple d'élément capacitif 5 est illustré en figure 5. L'élément capacitif 5 est notamment pourvu d'une première électrode formée par sa première extrémité 7 et d'une deuxième électrode de polarité opposée formée par la deuxième extrémité 9 opposée à la première extrémité 7. Alternativement, l'élément capacitif 5 pourrait avoir ses électrodes réunies sur une seule extrémité 7, 9. L'élément capacitif 5 est par exemple une capacité film. La courbure extérieure de l'élément capacitif 5 provient alors de la méthode de fabrication de l'élément capacitif : l'élément capacitif 5 est notamment constitué par des films enroulés en forme de cylindre aplati, les extrémités des cylindres formant les électrodes de la capacité, notamment après une étape de métallisation.

La première extrémité 7 de l'élément capacitif 5 est noyée dans la matière de remplissage 12 contenue dans le logement 3. La deuxième extrémité 9 de l'élément capacitif 5 s'étend hors du logement 3. Une butée 11 est fixée à l'élément capacitif 5 sur la deuxième extrémité 9 de l'élément capacitif 5. Des entretoises 13 s'étendent depuis le fond 15 du logement 3 pour venir contre la butée 11, de façon à déterminer la distance entre la deuxième extrémité 9 de l'élément capacitif 5 et le fond 15 du logement 3. L'exemple illustré comporte quatre entretoises 13, mais dans ce qui suit l'exemple sera décrit en faisant référence aux deux entretoises 13a, 13b relatifs à l'élément capacitif 5a, la description s'appliquant aisément aux autres éléments capacitifs 5 et leurs entretoises 13 correspondantes.

Notamment, le bloc capacitif 1 comprend une première borne électrique 23 configurée pour connecter l'élément capacitif 5 avec un élément extérieur. En particulier, la première borne électrique 23 vient contre la première extrémité 7 pour un contact électrique avec la première électrode de l'élément capacitif 5. À cet effet, la première borne électrique 23 comprend notamment des languettes 23L qui sont soudées sur la première électrode de l'élément capacitif 5. La première borne électrique 23 comporte en outre des ouvertures 25 par lesquelles passent les entretoises 13 pour venir contre la butée 11.

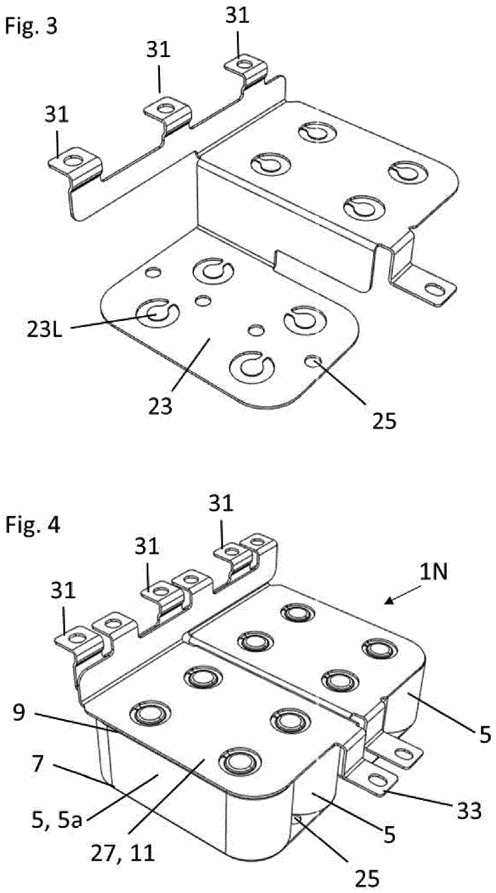

L'élément capacitif 5 est muni de la première borne électrique 23 et de la butée 11, pour former un bloc capacitif nu 1N, c'est-à-dire un bloc capacitif 1 sans capot 14, par exemple tel que présenté en figure 4. Puis le bloc capacitif nu 1N est monté dans le logement 3 du capot 14. Lors de ce montage, la première extrémité 7 du bloc capacitif 5 est introduite dans le capot 14 de sorte que les entretoises 13 passent dans les ouvertures 25 de la première borne électrique 23. L'introduction de l'élément capacitif 5 dans le capot 14 est arrêtée par le contact entre les têtes des entretoises 13 et la butée 11. Le positionnement des entretoises 13 dans le capot 14 est adapté pour correspondre avec les emplacements des ouvertures 25. Cependant, les entretoises 13 sont situées dans l'espace libre entre les éléments capacitifs 5 et le bord du fond 15 du logement 3, c'est-à-dire en particulier entre les éléments capacitifs 5 et la paroi latérale 17. Ainsi, une fois monté dans le logement 3, le bloc capacitif nu 1N est supporté par les entretoises 13. En particulier, il subsiste un espace entre le fond 15 du logement 3 et la première borne électrique 23. Autrement dit, l'élément capacitif 5 muni de la première borne électrique 23 est maintenu en suspension par les entretoises 13.

En particulier, la paroi latérale 17 du capot 14 s'étend à une hauteur qui permet à la matière de remplissage 12 d'englober la première borne électrique 23 et la première extrémité 7 de l'élément capacitif 5.

La butée 11 comporte notamment une deuxième borne de connexion électrique 27 du bloc capacitif 5. Comme la première borne de connexion électrique 23, la deuxième borne de connexion électrique 27 est en particulier configurée pour connecter l'élément capacitif 5 avec un élément extérieur. A cet effet, la deuxième borne de connexion électrique 27 vient sur la deuxième extrémité 9 de l'élément capacitif 5 contre la deuxième électrode de l'élément capacitif 5 formée notamment par la deuxième extrémité 9. Notamment, un vernis est répandu sur toute la deuxième extrémité 9 de l'élément capacitif 5 pour réaliser une étanchéité au niveau de la deuxième extrémité 9.

Notamment, la première borne de connexion électrique 23 comprend des extrémités 31 destinées à assurer une connexion avec un module électronique de puissance. Notamment, la deuxième borne de connexion électrique 27 comprend des extrémités 33 destinées à assurer une connexion avec une alimentation électrique, notamment une batterie.

Comme visible en figure 2, les entretoises 13 sont réparties de façon régulière sur le fond, 15 afin de permettre une tenue stable de la butée 11 et donc des éléments capacitifs 5.

Les entretoises 13 ont notamment une forme conique de section polygonale. Mais elles pourraient être de forme différente, par exemple en forme de tige cylindrique, conique ou d'une section arrondie. Une forme s'amincissant vers la butée 11 réunit l'avantage d'un socle solide et d'un enfilage facile lors du montage.

L'exemple de bloc capacitif 1 décrit est par ailleurs similaire à celui décrit dans la publication de demande de brevet européen EP3197035.

## Revendications

1. Bloc capacitif (1), notamment pour un équipement électrique, comportant :
- un logement (3),
- au moins un élément capacitif (5) ayant une première extrémité (7) logée dans ledit logement (3) et une deuxième extrémité (9), qui est opposée à la première extrémité (7) et qui s'étend hors dudit logement (3),
- une butée (11), ladite butée (11) étant fixée sur la deuxième extrémité (9) de l'élément capacitif (5),
- au moins une entretoise (13), venant contre ladite butée (11), de façon à déterminer la distance entre la deuxième extrémité (9) de l'élément capacitif (5) et un fond (15) dudit logement (3).

2. Bloc capacitif (1) selon la revendication 1, dans lequel une matière de remplissage (12), notamment une résine, remplit au moins en partie ledit logement (3) de manière à réaliser une étanchéité de l'élément capacitif (5) au niveau de la première extrémité (7) de l'élément capacitif (5).

3. Bloc capacitif (1) selon la revendication 2, dans lequel la deuxième extrémité (9) de l'élément capacitif (5) s'étend hors de ladite matière de remplissage (12).

4. Bloc capacitif (1) selon l'une des revendications précédentes, dans lequel ladite entretoise (13) s'étend depuis le fond (15) du logement (3).

5. Bloc capacitif (1) selon l'une des revendications précédentes, comportant au moins deux entretoises (13), et dans lequel lesdites entretoises (13) sont reparties régulièrement sur le fond (15) du logement (3).

6. Bloc capacitif (1) selon l'une des revendications précédentes, dans lequel ladite entretoise (13) a une forme cylindrique ou conique.

7. Bloc capacitif (1) selon l'une des revendications précédentes, dans lequel la première extrémité (7) de l'élément capacitif (5) comprend une première électrode de l'élément capacitif (5), et le bloc capacitif (1) comprend une première borne électrique (23) venant contre ladite première électrode de manière à se connecter électriquement à la première électrode, ladite première borne électrique (23) comportant au moins une ouverture (25), traversée par ladite entretoise (13).

8. Bloc capacitif (1) selon l'une des revendications précédentes, dans lequel ledit logement (3) est formé par le fond et une paroi latérale (17) s'étendant depuis ledit fond (15), délimitant un volume interne dudit logement (3).

9. Bloc capacitif (1) selon l'une des revendications précédentes, dans lequel ladite butée (11) comprend une deuxième borne de connexion électrique (27) du bloc capacitif (1), ladite deuxième borne électrique (27) venant contre une deuxième électrode de l'élément capacitif (5) de manière à se connecter électriquement à ladite deuxième électrode de l'élément capacitif (5).

10. Procédé d'assemblage d'un bloc capacitif (1) comprenant les étapes consistant à :
- fournir un élément capacitif (5) ayant une première extrémité (7) et une deuxième extrémité (9) opposées, une butée (11) étant fixée à la deuxième extrémité (9) ;
- monter ledit élément capacitif (5) dans un logement (3) par sa première extrémité (7) de sorte que la deuxième extrémité (9) soit hors dudit logement (3) ;
ladite étape de montage comprenant la mise en appui d'au moins une entretoise (13) contre ladite butée (11) de façon à déterminer la distance entre la deuxième extrémité (9) de l'élément capacitif (5) et un fond (15) dudit logement (3).

11. Procédé d'assemblage selon la revendication précédente comprenant une étape consistant à :
- connecter une première borne électrique (23) du bloc capacitif (1) sur une première électrode de l'élément capacitif (5) comprise dans la première extrémité (7), et connecter une deuxième borne électrique (27) du bloc capacitif (1) sur une deuxième électrode de l'élément capacitif (5) comprise dans la deuxième extrémité (9), la dite deuxième borne électrique (27) étant comprise dans la dite butée (11) ;
et dans lequel l'étape de montage comprend le passage de l'entretoise (13) dans une ouverture (25) de la première borne électrique (23) pour venir en appui contre ladite butée (11).

12. Procédé d'assemblage selon la revendication 11, comprenant les étapes consistant à
- remplir au moins en partie le logement (3) avec un matériau de remplissage (12) fluide de manière à combler au moins en partie, voire complètement, l'espace entre l'élément capacitif (5) et une paroi périphérique (15,17) du logement (3) ;
- durcir le matériau de remplissage (12), notamment par chauffage.

## Patentansprüche

1. Kapazitiver Block (1), insbesondere für eine elektrische Ausrüstung,
umfassend:
- ein Gehäuse (3),
- mindestens ein kapazitives Element (5) mit einem ersten Ende (7), das in dem Gehäuse (3) untergebracht ist, und einem zweiten Ende (9), das dem ersten Ende (7) gegenüberliegt und sich außerhalb des Gehäuses (3) erstreckt,
- einen Anschlag (11), wobei der Anschlag (11) am zweiten Ende (9) des kapazitiven Elements (5) befestigt ist,
- mindestens einen Abstandshalter (13), der gegen den Anschlag (11) anliegt, um den Abstand zwischen dem zweiten Ende (9) des kapazitiven Elements (5) und einem Boden (15) des Gehäuses (3) zu bestimmen.

2. Kapazitiver Block (1) nach Anspruch 1, wobei ein Füllmaterial (12),
insbesondere ein Harz, das Gehäuse (3) zumindest teilweise füllt, um eine Abdichtung des kapazitiven Elements (5) am ersten Ende (7) des kapazitiven Elements (5) zu gewährleisten.

3. Kapazitiver Block (1) nach Anspruch 2, wobei sich das zweite Ende (9) des kapazitiven Elements (5) außerhalb des Füllmaterials (12) erstreckt.

4. Kapazitiver Block (1) nach einem der vorhergehenden Ansprüche, wobei sich der Abstandshalter (13) vom Boden (15) des Gehäuses (3) erstreckt.

5. Kapazitiver Block (1) nach einem der vorhergehenden Ansprüche, umfassend mindestens zwei Abstandshalter (13), wobei die Abstandshalter (13) regelmäßig auf dem Boden (15) des Gehäuses (3) verteilt sind.

6. Kapazitiver Block (1) nach einem der vorhergehenden Ansprüche, wobei der Abstandshalter (13) eine zylindrische oder konische Form aufweist.

7. Kapazitiver Block (1) nach einem der vorhergehenden Ansprüche, wobei das erste Ende (7) des kapazitiven Elements (5) eine erste Elektrode des kapazitiven Elements (5) umfasst, und der kapazitive Block (1) einen ersten elektrischen Anschluss (23) umfasst, der gegen die erste Elektrode anliegt, um elektrisch mit der ersten Elektrode verbunden zu sein, wobei der erste elektrische Anschluss (23) mindestens eine Öffnung (25) aufweist, durch die der Abstandshalter (13) hindurchgeht.

8. Kapazitiver Block (1) nach einem der vorhergehenden Ansprüche, wobei das Gehäuse (3) durch den Boden und eine Seitenwand (17) gebildet wird, die sich von dem Boden (15) erstreckt und ein Innenvolumen des Gehäuses (3) begrenzt.

9. Kapazitiver Block (1) nach einem der vorhergehenden Ansprüche, wobei der Anschlag (11) einen zweiten elektrischen Anschluss (27) des kapazitiven Blocks (1) umfasst, wobei der zweite elektrische Anschluss (27) gegen eine zweite Elektrode des kapazitiven Elements (5) anliegt, um elektrisch mit der zweiten Elektrode des kapazitiven Elements (5) verbunden zu sein.

10. Verfahren zur Montage eines kapazitiven Blocks (1), umfassend die Schritte:
- Bereitstellen eines kapazitiven Elements (5) mit einem ersten Ende (7) und einem gegenüberliegenden zweiten Ende (9), wobei ein Anschlag (11) am zweiten Ende (9) befestigt ist;
- Einbau des kapazitiven Elements (5) in ein Gehäuse (3) mit seinem ersten Ende (7), sodass das zweite Ende (9) außerhalb des Gehäuses (3) liegt;
wobei der Einbauschritt das Anlegen mindestens eines Abstandshalters (13) gegen den Anschlag (11) umfasst, um den Abstand zwischen dem zweiten Ende (9) des kapazitiven Elements (5) und einem Boden (15) des Gehäuses (3) zu bestimmen.

11. Montageverfahren nach dem vorhergehenden Anspruch, umfassend einen Schritt, der darin besteht:
- Verbinden eines ersten elektrischen Anschlusses (23) des kapazitiven Blocks (1) mit einer ersten Elektrode des kapazitiven Elements (5), die im ersten Ende (7) enthalten ist, und Verbinden eines zweiten elektrischen Anschlusses (27) des kapazitiven Blocks (1) mit einer zweiten Elektrode des kapazitiven Elements (5), die im zweiten Ende (9) enthalten ist, wobei der zweite elektrische Anschluss (27) in dem Anschlag (11) enthalten ist; und wobei der Einbauschritt das Durchführen des Abstandshalters (13) durch eine Öffnung (25) des ersten elektrischen Anschlusses (23) umfasst, um gegen den Anschlag (11) anzuliegen.

12. Montageverfahren nach Anspruch 11, umfassend die Schritte:
- Füllen des Gehäuses (3) zumindest teilweise mit einem flüssigen Füllmaterial (12), um den Raum zwischen dem kapazitiven Element (5) und einer Umfangswand (15, 17) des Gehäuses (3) zumindest teilweise oder vollständig zu füllen;
- Aushärten des Füllmaterials (12), insbesondere durch Erhitzen.

## Claims

1. Capacitive block (1), particularly for electrical equipment, comprising:
- a housing (3),
- at least one capacitive element (5) having a first end (7) housed in said housing (3) and a second end (9), which is opposite to the first end (7) and which extends outside said housing (3),
- a stop (11), said stop (11) being fixed on the second end (9) of the capacitive element (5),
- at least one spacer (13), coming against said stop (11), so as to determine the distance between the second end (9) of the capacitive element (5) and a bottom (15) of said housing (3).

2. Capacitive block (1) according to claim 1, wherein a filling material (12), particularly a resin, fills at least partially said housing (3) so as to provide sealing of the capacitive element (5) at the level of the first end (7) of the capacitive element (5).

3. Capacitive block (1) according to claim 2, wherein the second end (9) of the capacitive element (5) extends outside said filling material (12).

4. Capacitive block (1) according to any one of the preceding claims, wherein said spacer (13) extends from the bottom (15) of the housing (3).

5. Capacitive block (1) according to any one of the preceding claims, comprising at least two spacers (13), and wherein said spacers (13) are regularly distributed on the bottom (15) of the housing (3).

6. Capacitive block (1) according to any one of the preceding claims, wherein said spacer (13) has a cylindrical or conical shape.

7. Capacitive block (1) according to any one of the preceding claims, wherein the first end (7) of the capacitive element (5) comprises a first electrode of the capacitive element (5), and the capacitive block (1) comprises a first electrical terminal (23) coming against said first electrode so as to electrically connect to the first electrode, said first electrical terminal (23) having at least one opening (25), through which said spacer (13) passes.

8. Capacitive block (1) according to any one of the preceding claims, wherein said housing (3) is formed by the bottom and a lateral wall (17) extending from said bottom (15), delimiting an internal volume of said housing (3).

9. Capacitive block (1) according to any one of the preceding claims, wherein said stop (11) comprises a second electrical connection terminal (27) of the capacitive block (1), said second electrical terminal (27) coming against a second electrode of the capacitive element (5) so as to electrically connect to said second electrode of the capacitive element (5).

10. Method of assembling a capacitive block (1) comprising the steps of:
- providing a capacitive element (5) having a first end (7) and an opposite second end (9), a stop (11) being fixed to the second end (9);
mounting said capacitive element (5) in a housing (3) by its first end (7) so that the second end (9) is outside said housing (3);
said mounting step comprising pressing at least one spacer (13) against said stop (11) so as to determine the distance between the second end (9) of the capacitive element (5) and a bottom (15) of said housing (3).

11. Assembly method according to the preceding claim comprising a step consisting of:
- connecting a first electrical terminal (23) of the capacitive block (1) to a first electrode of the capacitive element (5) included in the first end (7), and connecting a second electrical terminal (27) of the capacitive block (1) to a second electrode of the capacitive element (5) included in the second end (9), said second electrical terminal (27) being included in said stop (11); and wherein the mounting step comprises passing the spacer (13) through an opening (25) of the first electrical terminal (23) to come to rest against said stop (11).

12. Assembly method according to claim 11, comprising the steps of:
- filling at least partially the housing (3) with a fluid filling material (12) so as to fill at least partially, or even completely, the space between the capacitive element (5) and a peripheral wall (15,17) of the housing (3);
- hardening the filling material (12), particularly by heating.
